## Europäisches Patentamt

## European Patent Office

## Office européen des brevets

(11) Veröffentlichungsnummer: **0 170 331**
**B1**

(12) **EUROPÄISCHE PATENTSCHRIFT**

(45) Veröffentlichungstag der Patentschrift:
14.12.88

(21) Anmeldenummer: **85201215.2**

(22) Anmeldetag: **19.07.85**

(51) Int. Cl.⁴: **F 16 H 27/08**

(54) Zahnradgetriebe.

(30) Priorität: **01.08.84 AT 2482/84**

(43) Veröffentlichungstag der Anmeldung:
**05.02.86 Patentblatt 86/6**

(45) Bekanntmachung des Hinweises auf die Patenterteilung:
**14.12.88 Patentblatt 88/50**

(84) Benannte Vertragsstaaten:
**CH DE FR GB IT LI**

(56) Entgegenhaltungen:
**DE-A-2 936 004**
**DE-B-2 240 208**
**DE-B-2 517 259**
**DE-C-143 943**
**DE-C-348 517**
**DE-C-767 268**
**FR-A-63 550**
**FR-A-790 174**
**GB-A-1 429 673**
**US-A-3 882 735**

(73) Patentinhaber: **N.V. Philips' Gloeilampenfabrieken,
Groenewoudseweg 1, NL- 5621 BA Eindhoven (NL)**

(72) Erfinder: **Fleck, Harald, INT. OCTROOIBUREAU
B.V. Prof. Holstlaan 6, NL- 5656 AA Eindhoven
(NL)**
Erfinder: **Mader, Leopold, INT. OCTROOIBUREAU
B.V. Prof. Holstlaan 6, NL- 5656 AA Eindhoven
(NL)**
Erfinder: **Vollmann, Norbert, INT.
OCTROOIBUREAU B.V. Prof. Holstlaan 6, NL-
5656 AA Eindhoven (NL)**

(74) Vertreter: **Schrijnemaekers, Hubert Joannes
Maria, Internationaal Octrooibureau B.V. Prof.
Holstlaan 6, NL- 5656 AA Eindhoven (NL)**

LIBER, STOCKHOLM 1988

## Beschreibung

Die Erfindung bezieht sich auf ein Zahnradgetriebe mit einem in mindestens einer Antriebsrichtung antreibbaren treibenden Getriebeteil und einem von diesem antreibbaren Getriebeteil, von denen einer eine durch zwei Enden begrenzte Verzahnung aufweist, die zum Ineingriffbringen und Aussereingriffbringen der beiden Getriebeteilen beim Antreiben des treibenden Getriebeteiles über mindestens ein Ende derselben mit der Verzahnung am anderen Getriebeteil in und ausser Eingriff bringbar ist, wobei bei ausser Eingriff gebrachten Getriebeteilen einer derselben mit seiner Verzahnung in den Verstellweg der Verzahnung des anderen Getriebeteiles hineinragt und bei in Eingriff gebrachten Getriebeteilen von dem die begrenzte Verzahnung aufweisenden Getriebeteil mindestens n Zähne mit der Verzahnung am anderen Getriebeteil in Eingriff stehen, wobei n eine ganze Zahl grösser als Null ist, und die zum Ineingriffbringen derselben in mindestens einer Antriebsrichtung des treibenden Getriebeteiles ein der betreffenden Antriebsrichtung zugeordnetes Paar von in Richtung der Zahnbreite gegenüber den Verzahnung versetzt angeordneten Steueranschlägen tragen, die beim Ineingriffbringen der beiden Getriebeteile paarweise über an ihnen vorgesehene Anschlagflächen in Wirkverbindung treten, wobei jede Anschlagfläche eines Steueranschlages den gleich geometrischen Verlauf wie die beim Ineingriffbringen der Getriebeteile als erste in Antriebsverbindung tretende Zahnflankenfläche des hierbei als erster in Eingriff tretenden Zahnes den ihn tragenden Getriebeteiles aufweist und in Antriebsrichtung des diesen Steueranschlag tragenden Getriebeteiles wie beim Ineingriffbringen der Getriebeteile entlang des Teilkreises dieser Verzahnung vor der beim Ineingriffbringen der Getriebeteile als erste in Antriebsverbindung tretenden Zahnflankenfläche des als erster in Eingriff tretenden Zahnes dieses Getriebeteiles liegt und entlang dieses Teilkreises einen Abstand von dieser Zahnflankenfläche aufweist, der dem k-fachen der Teilkreisteilung entspricht, wobei k eine ganze Zahl zwischen Null und n-1 ist.

Ein solches Getriebe ist beispielweise aus der DE-PS-143 943 bekannt. Bei diesem bekannten Getriebe handelt es sich um ein nichtreversierbares Getriebe, dessen beiden Getriebeteile als Zahnräder ausgebildet sind und bei dem sowohl das treibende als auch das antreibbare Zahnrad sich stets in der gleichen Drehrichtung drehen, wobei das treibende, eine in sich geschlossene Verzahnung aufweisende Zahnrad eine kontinuierliche Drehbewegung und das antreibbare, eine begrenzte Verzahnung aufweisende Zahnrad eine periodische Drehbewegung ausführt. Bei dem bekannten Gerät muss zum Ineingriffbringen der beiden Zahnräder beim Antreiben des treibenden Zahnrades zusätzlich das antreibbare Zahnrad mit einer separaten Einrichtung angestossen werden, wonach dann erst die Steueranschläge mit ihren Anschlagflächen in Wirkverbindung treten und für ein einwandfreies Ineingriffbringen der beiden Zahnräder sorgen. Eine solche separate Einrichtung kompliziert aber das Getriebe und stellt einen zusätzlichen Aufwand dar.

Die Erfindung hat sich zur Aufgabe gestellt, ein Zahnradgetriebe der eingangs angeführten Gattung so auszubilden, dass es einfach reversierbar ist, dass das Ineingriffbringen der beiden Getriebeteile beim Antreiben des treibenden Getriebeteiles ohne zusätzliches Anstossen des antreibbaren Getriebeteiles erfolgt und dass die Betriebslage genau und reproduzierbar eingenommen werden können. Hierfür ist die Erfindung dadurch gekennzeichnet, dass zur Bildung eines wahlweise zwischen zwei Endpostionen reversierbaren Zahnradgetriebes der treibende Getriebeteil abwechselnd in zwei zueinander entgegengesetzten Antriebsrichtungen antreibbar ist, dass die Anschlagfläche des vom treibenden Getriebeteil getragenen Steueranschlages den gleichen geometrischen Verlauf wie die beim Ineingriffbringen der Getriebeteile in Antriebsrichtung des treibenden Getriebeteiles vorne liegende Zahnflankenfläche des als erster in Eingriff tretenden Zahnes dieses Getriebeteiles und die Anschlagsfläche des vom antreibbaren Getriebeteil getragenen Steueranschlages den gleichen geometrischen Verlauf wie bei beim Ineingriffbringen der Getriebeteile in Antriebsrichtung des antreibbaren Getriebeteiles hinten liegende Zahnflankenfläche des als erster in Eingriff tretenden Zahnes dieses Getriebeteiles aufweist und dass mindestens einer der beiden paarweise zusammenwirkenden Steueranschläge über den Kopfkreis der Verzahnung des diesen Steueranschlag tragenden Getriebeteiles hinaus verlängert und dabei seine Anschlagfläche nach der Zahnflankengeometrie fortgesetzt ist, wobei bei ausser Eingriff gebrachten Getriebeteilen der vom antreibbaren Getriebeteil getragene Steueranschlag mit seiner Anschlagfläche im Verstellweg der Anschlagfläche des vom treibenden Getriebeteil getragenen Steueranschlages liegt und zum Ineingriffbringen der beiden Getriebeteile der treibende Getriebeteil den von ihm getragenen Steueranschlag in Richtung zum Steueranschlag am antreibbaren Getriebeteil verstellt weiter ist die Erfindung dadurch gekennzeichnet dass ein feststehender Begrenzungsanschlag vorgesehen ist, der bei ausser Eingriff gebrachten Getriebeteilen einem am antreibbaren Getriebeteil vorgesehenen Gegenanschlag gegenüberliegt und dabei eine Verstellung des antreibbaren Getriebeteiles in der Antriebsrichtung wie beim Aussereingriffbringen der Getriebeteile blockiert. Hierdurch ist auf einfache Weise ein wahlweise reversierbares Zahnradgetriebe geschaffen, bei dem zusätzlich erreicht ist, dass beim Antreiben des treibenden Getriebeteiles der von diesem getragene Steueranschlag mit seiner Anschlagfläche gegen die Anschlagfläche des vom antreibbaren Getriebeteil getragenen Steueranschlages stösst und dabei diesen mitnimmt, so dass die beiden Getriebeteile auf besonders einfache Weise mit ihren Verzahnungen miteinander in Eingriff kommen, und das durch der Begrenzungsanschlag die Betriebslage genau und reproduzierbar eingenommen werden. Hierbei ist auf grund der zu je einer Zahnflankenfläche konformen Ausbildung der Anschlagfläche zugleich auch dafür gesorgt, dass die beiden Getriebeteile mit Sicherheit ohne Behinderungen, wie diese beispielsweise beim Aufeinandertreffen von zwei miteinander in Eingriff zu bringenden Zähnen mit ihren Stirnflächen auftreten, in Eingriff treten und dass der antreibbare Getriebeteil unmittelbar bevor die Verzahnungen miteinander in Antriebsverbindung kommen über die Steueranschläge praktisch mit derselben Winkelgeschwindigkeit angetrieben wird als danach über die Verzahnungen, so dass beim Ineingriffbringen der Getriebeteile eine gleichmässige Verstellbewegung für den antreibbaren Getriebeteil und die von diesem antreibbaren weitere Teile erhalten wird. Von den beiden Getriebeteilen können beide als Zahnrad oder aber einer auch als Zahnstange ausgebildet sein, die in der Zahnradgetriebetechnik bekanntlich als Zahnrad mit unendlich grossem Durchmesser betrachtet wird.

Beim erfindungsgemässen Getriebe liegt der vom antreibbaren Getriebeteil getragene Steueranschlag mit seiner Anschlagfläche bei ausser Eingriff gebrachten Getriebeteilen im Verstellweg der Anschlagfläche des vom treibenden Getriebeteil getragenen Steueranschlages. Dies ergibt sich dadurch, daß beim Aussereingriffbringen der beiden Getriebeteile (nach dem Lösen der Verzahnungen voneinander) der feststehende Begrenzungsanschlag (bei ausser Eingriff gebrachten Getriebeteilen) an einem am antreibbaren Getriebeteil vorgesehenen Gegenanschlag anliegt und dabei eine Verstellung des antreibbaren Getriebeteiles in der Antriebsrichtung. Hierdurch ist auf besonders einfache Weise ein zu weites Verstellen des antreibbaren Getriebeteiles nach dem Lösen der Verzahnung der beiden Getriebeteile (beim Aussereingriffbringen derselben) sicher unterbunden, so dass stets sichergestellt ist, dass der Steueranschlag am antreibbaren Getriebeteil mit seiner Anschlagfläche im Verstellweg der Anschlagfläche des Steueranschlages am treibenden Getriebeteil verbleibt und damit stets ein neuerliches einwandfreies Ineingriffbringen der beiden Getriebeteile gewährleistet ist.

Es ist zu erwähnen, dass an sich aus der DE-PS-348 517 ein aus fünf Zahnrädern bestehendes reversierbares Zahnradgetriebe bekannt ist, bei dem aber der Reversiervorgang mit einer durch den Aufbau des Getriebes festgelegten Periodizität erfolgt, so dass der Reversiervorgang nicht frei wählbar ist, wie dies aber beim erfindungsgemässen Getriebe der Fall ist. Bei dem aus der DE-PS-348 517 bekannten Getriebe ist ein Zahnrad mit einem über den Kopfkreis seiner Verzahnung hinausragenden zahnartigen Vorsprung versehen, der zum Ineingriffbringen dieses Zahnrades mit einem weiteren Zahnrad in eine unter den Fusskreis des weiteren Zahnrades reichende zahnlückenartige Vertiefung eintritt. Dabei weist aber der Vorsprung eine gänzlich andere Form als die Zähne dieses Zahnrades und daher auch die Vertiefung des weiteren Zahnrades eine gänzlich andere Form als die Zahnlücken dieses weiteren Zahnrades auf, so dass die beim Ineingriffbringen der beiden Zahnräder miteinander zusammenwirkenden Anschlagflächen am Vorsprung und in der Vertiefung nicht konform zu den Zahnflankenflächen der Verzahnungen sind, weshalb bei diesem bekannten Getriebe nur dann gewährleistet ist, dass bei beiden Zahnräder ohne Behinderungen miteinander in Eingriff treten, wenn die Ausbildung des Vorsprunges und der damit zusammenwirkenden Vertiefung in ihrer Lage und Form sehr genau an die Verzahnungen der Zahnräder angepasst ist, was aber eine hohe Präzision bei der Herstellung der Getriebeteile erfordert und damit eine erhebliche Verteuerung mit sich bringt. Demgegenüber wird dies beim erfindungsgemässen Getriebe auf grund der zu den Zahnflankenflächen konformen Ausbildung der Anschlagflächen der Steueranschläge auf sehr einfache Weise realisiert, wobei auch keine hohen Präzisionsanforderungen bei der Herstellung der Getriebeteile zu erfüllen sind. Da die Anschlagflächen nicht konform zu den Zahnflankenflächen ausgebildet sind, wird bei dem bekannten Getriebe dem antreibbaren Zahnrad über die Steueranschläge eine andere Winkelgeschwindigkeit erteilt als über die Verzahnungen, so dass beim Ineingriffbringen der Zahnräder auf grund des Geschwindigkeitswechsels eine störende Unregelmässigkeit in der Verstellbewegung des antreibbaren Zahnrades auftritt, was beim erfindungsgemässen Getriebe hingegen nicht der Fall ist.

Es ist weiter zu erwähnen, dass aus der FR-A-790 174 ein Zahnradgetriebe bekannt ist, wobei das treibende Zahnrad A ebenfalls Bereiche aufweist, während denen Drehgeschwindigkeit auf ein getriebenes Rad D übertragen wird (Verzahnungsbereich B) und Bereiche, die bei Weiterdrehen des treibenden Rads A einen Stillstand des getriebenen Rads D bewirken (Bereich C). Die Drehrichtung dieses bekannten Getriebes ist ganz offensichtlich ebenfalls umkehrbar. Beide Zahnräder A und D weisen ebenfalls Steueranschläge (bei 2 bzw. 1, 6) auf, deren Zahnflanken den gleichen geometrischen Verlauf aufweisen, wie die beim Ineingriffbringen der Räder vorneliegenden Zahnflankenflächen der kämmenden Zahne. Weiterhin geht einer der Steueranschläge über den Kopfkreis der Verzahnung in radialer Richtung hinaus. In funktioneller Hinsicht sind die Steueranschläge 2; 1, 6 ebenfalls axial neben der Hauptverzahnung angebracht. Jedoch ein feststehender Begrenzungsanschlag und ein am antreibbaren Getriebeteil vorgesehenen Gegenanschlag sind nicht aus der FR-A-790 174 bekannt.

Weiters hat sich als vorteilhaft erwiesen, wenn bei ausser Eingriff gebrachten Getriebeteilen der Gegenanschlag am antreibbaren Getriebeteil mit der Kraft einer Feder an den feststehenden Begrenzungsanschlag angelegt gehalten ist. Hierdurch wird der antreibbare Getriebeteil bei ausser Eingriff gebrachten Getriebeteilen mit seinem Gegenanschlag spielfrei an den feststehenden Begrenzungsanschlag angelegt gehalten und dabei genau in seiner Lage positioniert, wodurch auch mit dem antreibbaren Getriebeteil verbundene, von diesem verstellbare weitere Teile in ihrer Lage genau positioniert sind. Weiters ist hierbei zusätzlich auch erreicht, dass bei ausser Eingriff gebrachten Getriebeteilen die Verzahnungen derselben ausser Eingriff bleiben.

Ebenfalls hat sich hierbei als vorteilhaft erwiesen, wenn der treibende Getriebeteil einen weiteren Begrenzungsanschlag aufweist, der bei ausser Eingriff gebrachten Getriebeteilen einem am antreibenden Getriebeteil vorgesehenen weiteren Gegenanschlag gegenüberliegt und eine Verstellung des antreibbaren Getriebeteiles in der Antriebsrichtung wie beim Ineingriffbringen der Getriebeteile blockiert. Hierdurch ist der antreibbare Getriebeteil mit seinem Gegenanschlag und dem weiteren Gegenanschlag formschlüssig zwischen dem feststehenden und dem antreibenden Getriebeteil vorgesehenen Begrenzungsanschlag bei ausser Eingriff gebrachten Getriebeteilen festgehlaten, wobei auf denselben keine äusseren Kräfte einwirken, was in Hinblick auf einen unbeeinflussten und leichtgängigen Bewegungsablauf im Getriebe vorteilhaft ist. Durch das Zusammenwirken des weiteren Gegenanschlages am antreibbaren Getriebeteil mit dem weiteren Begrenzungsanschlag am treibenden Getriebeteil ist dabei zusätzlich wieder erreicht, dass bei ausser Eingriff gebrachten Getriebteilen die Verzahnungen derselben auch mit Sicherheit ausser Eingriff bleiben.

Der weitere Begrenzungsanschlag am treibenden Getriebeteil kann beispielsweise durch einen von einem verzahnungsfreien Abschnitt des treibenden Getriebeteiles vorspringenden Fortsatz gebildet sein, der mit einem als weiterer Gegenanschlag am antreibbaren Getriebeteil vorgesehenen Zahn der Verzahnung des antreibbaren Getriebeteiles zusammenwirkt und diesem bei ausser Eingriff gebrachten Getriebeteilen gegenüberliegt. Als besonders vorteilhaft hat sich erwiesen, wenn der weitere Gegenanschlag durch einen am antreibbaren Getriebeteil vorgesehenen verlängerten Steueranschlag gebildet ist. Auf diese Weise wird der Steueranschlag am antreibbaren Getriebeteil nicht nur zum Ineingriffbringen der Getriebeteile, sondern zusätzlich auch zum Festlegen der Lage des antreibbaren Getriebeteiles bei ausser Eingriff gebrachten Getriebeteilen ausgenützt, wobei die für diese Festlegung verwendeten Anschläge keinen einschränkenden Einfluss auf die Ausbildung der Verzahnungen ausüben.

Die Erfindung wird im folgenden anhand von drei in den Zeichnungen dargestellten Ausführungsbeispielen, auf die sie jedoch nicht beschränkt sein soll, näher beschrieben.

Die Fig. 1 zeigt schematisch in Draufsicht ein wahlweise zwischen zwei Endpositionen reversierbares Zahnradgetriebe gemäss einem ersten Ausführungsbeispiel, dessen beide Zahnräder zum Ineingriffbringen derselben in einer Antriebsrichtung des treibenden Zahnrades ein Paar von Steueranschlägen aufweisen, wobei die beiden Zahnräder eine ihrer Endpositionen einnehmen und mit ihren Verzahnungen ausser Eingriff stehen.

Die Fig. 2 zeigt in einem Schnitt längs der kreisbogenförmigen Linie II-II in Fig. 1, die mit einem Teilkreisbogen des treibenden Zahnrades übereinstimmt, ein Detail mit dem Steueranschlag am treibenden Zahnrad.

Die Fig. 3 zeigt in einem Schnitt längs der kreisbogenförmigen Linie III-III in Fig. 1, die mit einem Teilkreisbogen des antreibbaren Zahnrades übereinstimmt, ein Detail mit dem Steueranschlag am antreibbaren Zahnrad.

Die Fig. 4 zeigt analog wie die Fig. 1 das Zahnradgetriebe gemäss Fig. 1, wobei die beiden Zahnräder die andere ihrer beiden Endpositionen einnehmen und mit ihren Verzahnungen in Eingriff stehen.

Die Fig. 5 zeigt analog wie die Fig. 1 ein wahlweise reversierbares Zahnradgetriebe gemäss einem zweiten Ausführungsbeispiel, dessen beiden Zahnräder zum Ineingriffbringen derselben in beiden Antriebsrichtungen des treibenden Zahnrades zwei Paare von Steueranschlägen aufweisen, wobei die beiden Zahnräder eine ihrer beiden Endpositionen einnehmen und mit ihren Verzahnungen ausser Eingriff stehen.

Die Fig. 6 zeigt das Zahnradgetriebe gemäss Fig. 5, wobei die beiden Zahnräder nach ihrer Verstellung aus ihrer einen Endposition ihre andere Endposition einnehmen und mit ihren Verzahnungen, nachdem diese beim Verstellen der Zahnräder in Eingriff gestanden sind, wiederum ausser Eingriff stehen.

Die Fig. 7 zeigt ein wahlweise reversierbares Zahnradgetriebe gemäss einem dritten Ausführungsbeispiel, dessen beide Zahnräder zum Ineingriffbringen derselben in einer Antriebsrichtung des treibenden Zahnrades ein Paar von Steueranschlägen aufweisen, wobei der Steueranschlag am treibenden Zahnrad, das eine begrenzte Verzahnung aufweist, in Antriebsrichtung desselben zum Ineingriffbringen der beiden Zahnräder vor der begrenzten Verzahnung des treibenden Zahnrades angeordnet ist.

Die Fig. 8 zeigt in einem analogen Schnitt wie die Fig. 2 ein Detail mit dem Steueranschlag am treibenden Zahnrad des Zahnradgetriebes gemäss Fig. 7.

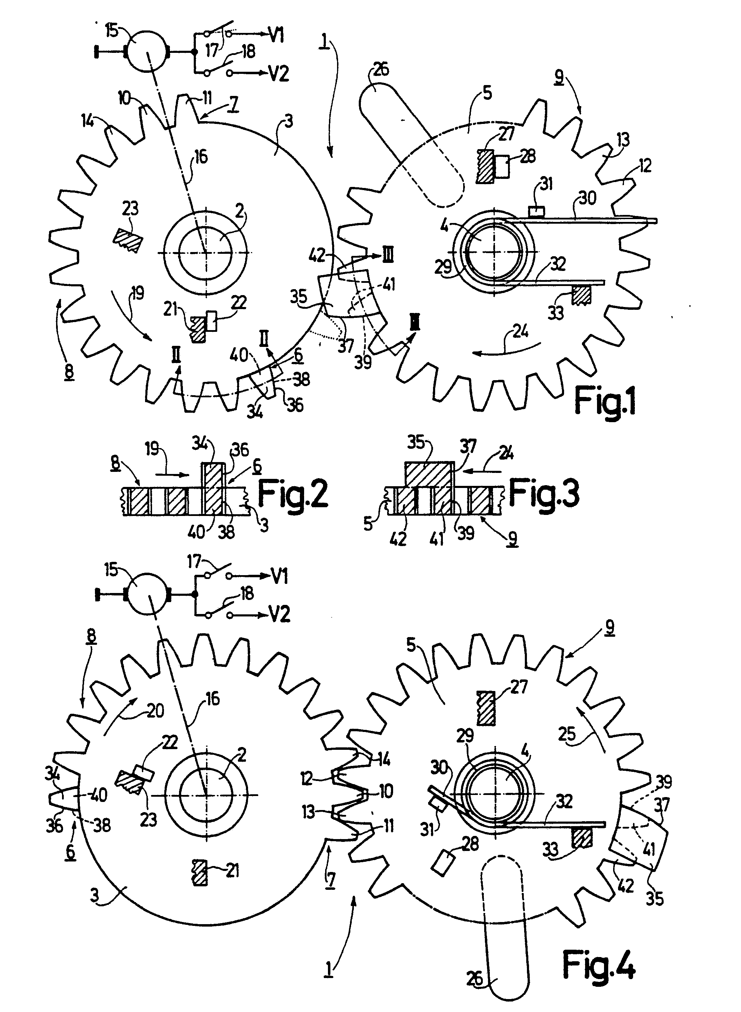

In den Fig. 1 bis 4 ist ein wahlweise zwischen zwei Endpositionen reversierbares Zahnradgetriebe 1 dargestellt, wobei die Fig. 1 die Getriebeteile in ihrer einen Endposition und die Fig. 4 die Getriebeteile in ihrer anderen Endposition zeigen. Das Zahnradgetriebe 1 weist als treibenden Getriebeteil ein um eine Welle 2 drehbar gelagertes Zahnrad 3 und als antreibbaren Getriebeteil ein um eine Welle 4 drehbar gelagertes Zahnrad 5 auf. Das treibende Zahnrad 3 weist zwingend eine durch zwei Enden 6 und 7 begrenzte Verzahnung 8 auf. Das antreibbare Zahnrad 5 weist eine den gesamten Umfang des Zahnrades 5 bedeckende, in sich geschlossene, nur teilweise dargestellte Verzahnung 9 auf, von der aber nur ein Teil mit der begrenzten Verzahnung 8 am treibenden Zahnrad 3 in Eingriff gebracht wird. Aus diesem Grunde könnte das Zahnrad 5 aber beispielsweise in dem mit strichpunktierten Linien angedeuteten Verzahnungsbereich auch einen zahnfreien Abschnitt aufweisen, so dass dann auch das antreibbare Zahnrad eine durch zwei Enden begrenzte Verzahnung hätte. Die Tatsache, dass eines der beiden Zahnräder zwingend eine begrenzte Verzahnung aufweist, bildet die Voraussetzung dafür, dass die beiden Zahnräder mit ihren Verzahnungen in und ausser Eingriff bringbar sind. Im vorliegenden Fall ist die begrenzte Verzahnung 8 zum Ineingriffbringen und zum Aussereingriffbringen der beiden Zahnräder 3 und 5 beim Antreiben des treibenden Zahnrades 3 über das Ende 6 derselben mit der Verzahnung 9 am antreibbaren Zahnrad 5 in und ausser Eingriff bringbar. Bei ausser Eingriff gebrachten Zahnrädern 3 und 5 ragt das Zahnrad 5 mit seiner Verzahnung 9 in den Verstellweg der begrenzten Verzahnung 8 am Zahnrad 3 hinein, wie Fig. 1 zeigt. Bei in Eingriff gebrachten Verzahnungen 8, 9 stehen von dem die begrenzte Verzahnung 8 aufweisenden Zahnrad 3 mindestens n Zähne, wobei in diesem Fall n = 2 ist, mit der Verzahnung 9 am anderen Zahnrad 5 in Eingriff, wie dies Fig. 4 zeigt, wobei die miteinander in Eingriff stehenden Zähne mit den Bezugszeichen 10, 11, 12 und 13 bezeichnet sind. Es ist festzuhalten, dass der mit dem Bezugszeichen 14 bezeichnete Zahn des Zahnrades 3 sich bei der in Fig. 4 dargestellten Situation nicht mehr in Eingriff mit der Verzahnung 9 des Zahnrades 5 befindet. Es ist festzuhalten, dass die Darstellungsweise der Verzahnungen 8 und 9 der einfachheit halber schematisiert ist und dass es sich bei den vorliegenden Verzahnungen um Evolventenverzahnungen handelt, der geometrische Verlauf der Zahnflankenflächen also Evolventen entspricht.

Das treibende Zahnrad 3 ist von einem Motor 15 her über eine schematisch mit einer strichpunktierten Linie dargestellte Antriebsverbindung 16 zwischen seinen beiden Endpositionen abwechselnd in zwei zueinander entgegengesetzten Antriebsrichtungen antreibbar, wobei in dieser Antriebsverbindung eine motorseitige, in zwei entgegengesetzten Drehrichtungen wirksame Überlastkupplung, die beispielsweise als Schlingfederkupplung ausgebildet ist, und ein zahnradseitiges Selbsthemmgetriebe, wie beispielsweise ein Schneckengetriebe, enthalten ist. Der Motor 15 ist über einen ersten Schalter 17 an eine Versorgungsspannung V1 und über einen zweiten Schalter 18 an eine Versorgungsspannung V2 anschliessbar. Beim Schliessen des ersten Schalters 17 läuft der Motor 15 in einer solchen Drehrichtung, dass derselbe über die Antriebsverbindung 16 das treibende Zahnrad 3 in der mit dem Pfeil 19 angegebenen Antriebsrichtung antreibt, in der die beiden Zahnräder 3 und 5 mit ihren Verzahnungen 8 und 9 in Eingriff bringbar sind. Beim Schliessen des zweiten Schalters 18 läuft der Motor 15 in der entgegengesetzten Drehrichtung, so dass dann derselben über die Antriebsverbindung 16 das treibende Zahnrad 3 in der mit dem Pfeil 20 angegebenen entgegengesetzten Antriebsrichtung antreibt, in der die beiden Zahnräder 3 und 5 mit ihren Verzahnungen ausser Eingriff bringbar sind.

Das treibende Zahnrad 3 ist wie erwähnt zwischen zwei Endpositionen, nämlich einer in Fig. 1 dargestellten Ruhelage und einer in Fig. 4 dargestellten Betriebslage, verdrehbar, in denen das Zahnrad 3 jeweils durch das Selbsthemmgetriebe auch nach dem Stillsetzen des Motors 15 durch Öffnen der Schalter 17 bzw. 18 festgehalten wird. Die Ruhelage des treibenden Zahnrades 3 ist durch einen ersten feststehenden Begrenzungsanschlag 21 festgelegt, an dem sich ein am treibenden Zahnrad 3 vorgesehener, von demselben in axialer Richtung abstehender Gegenanschlag 22 bei in seiner Ruhelage befindlichem Zahnrad 3 abstützt, wie dies in Fig. 1 dargestellt ist. Die Betriebslage des Zahnrades 3 ist durch einen zweiten feststehender Begrenzungsanschlag 23 festgelegt, an dem sich der Gegenanschlag 22 bei in seiner Betriebslage befindlichem Zahnrad 3 abstützt, wie dies in Fig. 4 dargestellt ist.

Das antreibbare Zahnrad 5 ist wie erwähnt ebenfalls zwischen zwei Endpositionen, nämlich einer in Fig. 1 dargestellten Ruhelage und einer in Fig. 4 dargestellten Betriebslage, verdrehbar. Beim Antreiben des treibenden Zahnrades 3 in der Antriebsrichtung 19 werden die beiden Zahnräder, wie nachfolgend noch detailliert beschrieben, in Eingriff gebracht und das antreibbare Zahnrad 5 in der mit dem Pfeil 24 angegebenen Antriebsrichtung aus seiner Ruhelage in seine Betriebslage verdreht. Beim Antreiben des treibenden Zahnrades 3 in der entgegengesetzten Antriebsrichtung 20 wird das antreibbare Zahnrad entgegengesetzt in der mit dem Pfeil 25 angegebenen Antriebsrichtung angetrieben, wobei das antreibbare Zahnrad 5 von seiner Betriebslage in seine Ruhelage verdreht wird und die beiden Zahnräder wieder ausser Eingriff gebracht werden. Mit dem antreibbaren Zahnrad 5 ist ein Arm 26 verbunden, der beispielsweise mit einem Zwischenhebel zur Verstellbewegungs-Übertragung auf weitere Teile gelenkig verbunden sein kann. Die Ruhelage des antreibbaren Zahnrades 5 ist durch einen weiteren feststehenden Begrenzungsanschlag 27 festgelegt, der bei ausser Eingriff gebrachten Zahnrädern 3 und 5 einem am antreibbaren Zahnrad 5 vorgesehenen, von demselben in axialer Richtung abstehenden Gegenanschlag 28 gegenüberliegt und dabei eine Verstellung des antreibbaren Zahnrades 5 in der Antriebsrichtung 25 wie beim Aussereingriffbringen der Zahnräder blockiert. In der Ruhelage des antreibbaren Zahnrades 5, also bei ausser Eingriff gebrachten Zahnrädern, ist hierbei der Gegenanschlag 28 am antreibbaren Zahnrad 5 mit der Kraft einer Feder 29 an den feststehenden Begrenzungsanschlag 27 angelegt gehalten. Die Feder 29 ist durch eine mehrere Windungen aufweisende, auf die Welle 4 aufgesetzte Schenkelfeder gebildet, deren in axialer Richtung näher beim antreibbaren Zahnrad 5 liegender einer Schenkel 30 sich an einem an antreibbaren Zahnrad 5 vorgesehenen Fortsatz 31 und deren vom antreibbaren Zahnrad weiter entfernt liegender anderer Schenkel 32 sich an einem weiteren feststehenden Anschlag 33 abstützt. Die Betriebslage des antreibbaren Zahnrades 5 ist über die in Eingriff stehenden Zähne 10, 11 und 12, 13 der beiden Verzahnungen 8 und 9 durch das in seiner Betriebslage festgehaltene treibende Zahnrad 3 festgelegt.

Die beiden Zahnräder 3 und 5 tragen zum Ineingriffbringen derselben in der Antriebsrichtung 19 des treibenden Zahnrades 3 ein dieser Antriebsrichtung zugeordnetes Paar von in Richtung der Zahnbreite, also in axialer Richtung der Zahnräder gegenüber den Verzahnungen 8 und 9 versetzt angeordneten Steueranschlägen 34 und 35. Die Steueranschläge 34 und 35 treten beim Ineingriffbringen der beiden Zahnräder 3 und 5 paarweise über an ihnen vorgesehene Anschlagflächen 36 und 37 formschlüssig in Wirkverbindung. Jede Anschlagfläche 36 bzw. 37 eines Steueranschlages 34 bzw. 35 weist den gleichen geometrischen, also evolventenförmigen Verlauf wie die beim Ineingriffbringen der Zahnräder 3 und 5 als erste in Antriebsverbindung tretende Zahnflankenfläche 38 bzw. 39 des hierbei als erster in Eingriff tretenden Zahnes 40 bzw. 41 des ihn tragenden Zahnrades 3 bzw. 5 auf und jede Anschlagfläche 36 bzw. 37 fluchtet in Richtung der Zahnbreite mit der als erste in Antriebsverbindung tretenden Zahnflankenfläche 38 bzw. 39. Die Anschlagfläche 36 des vom treibenden Zahnrad 3 getragenen Steueranschlages 34 weist den gleichen geometrischen Verlauf wie die beim Ineingriffbringen der Zahnräder in Antriebsrichtung 19 des treibenden Zahnrade 3 vorne liegende Zahnflankenfläche 38 des als erster in Eingriff tretenden Zahnes 40 dieses Zahnrades 3 auf. Die Anschlagfläche 37 des vom antreibbaren Zahnrad 5 getragenen Steueranschlages 35 weist den gleichen geometrischen Verlauf wie die beim Ineingriffbringen der Zahnräder in Antriebsrichtung 24 des antreibbaren Zahnrades 5 hinten liegende Zahnflankenfläche 39 des als erster in Eingriff tretenden Zahnes 41 dieses Zahnrades 5 auf. Von den beiden paarweise zusammenwirkenden Steueranschlägen 34 und 35 ist der Steueranschlag 35 am Zahnrad 5 über den Kopfkreis der Verzahnung 9 des den Steueranschlag 35 tragenden Zahnrades 5 hinaus verlängert und dabei seine Anschlagfläche 37 nach der Zahnflankengeometrie, also entsprechend dem evolventenförmigen Verlauf der Zahnflankenfläche 39, fortgesetzt.

Der Steueranschlag 34 ist durch einen in Richtung der Zahnbreite sich mit dem Zahn 40 überdeckenden, mit diesem einstückig verbundenen Fortsatz des Zahnrades 3 gebildet. Der Steueranschlag 35 ist durch einen die Zahnlücke zwischen dem Zahn 41 und dem in Richtung des Pfeiles 24 neben dem Zahn 41 liegenden Zahn 42 in Richtung der Zahnbreite überdeckenden, mit den beiden Zähnen 41 und 42 einstückig verbundenen Fortsatz des Zahnrades 5 gebildet. Bei ausser Eingriff gebrachten Zahnrädern 3 und 5 liegt der vom antreibbaren Zahnrad 5 getragene Steueranschlag 35 mit seiner Anschlagfläche 37 im Verstellweg der Anschlagfläche 36 des vom treibenden Zahnrad 3 getragenen Steueranschlages 34. Zum Ineingriffbringen der beiden Zahnräder 3 und 5 verstellt das treibende Zahnrad 3 den von ihm getragenen Steueranschlag 34 in Richtung zum Steueranschlag 35 am antreibbaren Zahnrad 5.

Nachfolgend ist die Funktionsweise des Zahnradgetriebes gemäss den Fig. 1 bis 4 beschrieben, wobei davon ausgegangen wird, dass sich das Zahnradgetriebe 1 in einer ersten Endposition befindet, in der die beiden Zahnräder 3 und 5 ihre in Fig. 1 dargestellte Ruhelage einnehmen. Wenn in diesem Fall irrtümlicherweise der Schalter 18 geschlossen wird, wird zwar der Motor 15 in Drehung versetzt, jedoch kann das treibende Zahnrad 3 nicht entgegen der Antriebsrichtung 19 verdreht werden, weil der feststehende Begrenzungsanschlag 21 eine Verstellung des Gegenanschlages 22 am treibenden Zahnrad 3 blockiert, so dass in diesem Fall die in der Antriebsverbindung 16 enthaltene Überlastkupplung die Kraftübertragung vom Motor 15 zum treibenden Zahnrad 3 unterbricht. Wird hingegen der Schalter 17 geschlossen, dann wird das treibende Zahnrad 3 vom Motor 15 über die Antriebsverbindung 16 in der Antriebsrichtung 19 in Drehung versetzt, so dass das Zahnrad 3 seine in Fig. 1 dargestellte Ruhelage verlässt. Während dieser Drehung des treibenden Zahnrades 3 kommt der Steueranschlag 34 in eine in Fig. 1 mit punktierten Linien dargestellte Lage, in der die Anschlagfläche 36 des Steueranschlages 34 mit der Anschlagfläche 37 des Steueranschlages 35 in Berührung tritt. Beim weiteren Verdrehen des treibenden Zahnrades 3 nimmt der Steueranschlag 34 den Steueranschlag 35 formschlüssig mit, wobei das antreibbare Zahnrad 5 mitverdreht wird und dabei die beiden evolventenförmig verlaufenden Anschlagflächen 36 bzw. 37, die mit den als erste in Antriebsverbindung tretenden Zahnflankenflächen 38 bzw. 39 der als erster in Eingriff tretenden Zähne 40 bzw. 41 fluchten, formschlüssig zusammenwirken und sich im wesentlichen aneinander abwälzen. Hierbei sorgen die Anschlagflächen 36 und 37 aufgrund ihres evolventenförmigen Verlaufes für eine beim Abwälzen gleich bleibende Übersetzung und dafür, dass die beiden Verzahnungen 8 und 9, noch bevor die als erste in Eingriff tretenden Zähne 40 bzw. 41 miteinander in Kontakt treten, so in ihrer Relativlage zueinander ausgerichtet werden, dass die mit den Anschlagflächen 36 bzw. 37 fluchtenden Zahnflankenflächen 38 bzw. 39 mit Sicherheit ohne Behinderungen miteinander in Berührung treten, so dass für ein ungestörtes, kontinuierlich verlaufendes, einwandfreies Ineingriffbringen der beiden Verzahnungen 8 und 9 gesorgt ist. Dieses Ineingriffbringen erfolgt hierbei beim Antreiben des treibenden Zahnrades 3 vollkommen selbsttätig durch die miteinander zusammenwirkenden Steueranschläge 34 und 35. Nachdem die beiden Zahnräder 3 und 5 mit ihren Verzahnungen 8 und 9 in Eingriff gebracht wurden, wird das antreibbare Zahnrad 5 vom treibenden Zahnrad 3 über die Verzahnungen 8 und 9 angetrieben, was entgegen der Kraft der Feder 29 erfolgt. Sobald das treibende Zahnrad 3 seine Betriebslage erreicht hat, in der der Gegenanschlag 22 des Zahnrades 3 gegen den feststehenden Begrenzungsanschlag 23 stösst, wird die Kraftübertragung vom Motor 15 auf das treibende Zahnrad 3 durch die in der Antriebsverbindung 16 enthaltene Überlastkupplung unterbrochen und das treibende Zahnrad 3 durch das Selbsthemmgetriebe in seiner Betriebslage festgehalten, wodurch dann auch das antreibbare Zahnrad 5 über die miteinander in Eingriff stehenden Verzahnungen 8 und 9 in seiner Betriebslage gehalten ist. Damit befindet sich das Zahnradgetriebe 1 in seiner zweiten Endposition und der Schalter 17 kann wieder geöffnet werden.

Um das Zahnradgetriebe 1 wieder aus der in Fig. 4 dargestellten zweiten Endposition in seine erste Endposition zu bringen, muss der Schalter 18 geschlossen werden. Ein irrtümliches Schliessen des Schalters 17 in dieser Situation bleibt wirkungslos, weil der sich am Begrenzungsanschlag 23 abstützende Gegenanschlag 22 des Zahnrades 3 eine Drehung dieses Zahnrades 3 entgegen der Antriebsrichtung 20 verhindert und die Überlastkupplung in der Antriebsverbindung 16 die Kraftübertragung zum treibenden Zahnrad 3 unterbricht. Durch Schliessen des Schalters 18 wird vom Motor 15 über die Antriebsverbindung 16 das treibende Zahnrad 3 in der Antriebsrichtung 20 angetrieben, so dass das Zahnrad 3 seine in Fig. 4 dargestellte Betriebslage verlässt. Über die in Eingriff stehenden Verzahnungen 8 und 9 wird hierbei das antreibbare Zahnrad 5 mitgenommen, wobei die Feder 29 die Verdrehung des Zahnrades 5 unterstützt. Sobald die beiden Verzahnungen 8 und 9 ausser Eingriff treten, sorgt die Feder 29 dafür, dass das Zahnrad 5 in seine Ruhelage zurückverstellt wird, in der sich der Gegenanschlag 28 des Zahnrades 5 am feststehenden Begrenzungsanschlag 27 abstützt und in der der Steueranschlag 35 am antreibbaren Zahnrad 5 mit seiner Anschlagfläche 37 sich im Verstellweg der Anschlagfläche 36 des Steueranschlages 34 am treibenden Zahnrad 3 befindet. Sobald das treibende Zahnrad 3 seine Ruhelage erreicht, unterbricht die Überlastkupplung in der Antriebsverbindung 16 die Kraftübertragung vom Motor 15 auf das Zahnrad 3 und das Selbsthemmgetriebe hält das Zahnrad 3 in seiner Ruhelage. Damit befindet sich das Zahnradgetriebe 1 wieder in seiner ersten Endposition und der Schalter 18 kann wieder geöffnet werden.

Wie aus vorstehender Beschreibung ersichtlich, ist durch die erfindungsgemässen Massnahmen auf besonders einfache Weise ein wahlweise zwischen zwei Endpositionen reversierbares Zahnradgetriebe geschaffen, dessen beide Zahnräder durch das Vorsehen der beiden Steueranschläge selbsttätig miteinander in Eingriff bringbar sind, wobei aufgrund des evolventenförmigen Verlaufes der Anschlagflächen der Steueranschläge stets mit Sicherheit für ein gleichmässiges, ungestörtes und exaktes Ineingriffbringen der Verzahnungen gesorgt ist. Bei ausser Eingriff befindlichen Zahnrädern ist die Lage des antreibbaren Zahnrades sehr einfach durch einen feststehenden Anschlag festgelegt, gegen den dieses Zahnrad mit Federkraft angelegt gehalten ist. Hierdurch ist mit Sicherheit vermieden, dass das antreibbare Zahnrad nach dem Lösen der Verzahnungen voneinander zu weit verstellt wird, so dass stets sichergestellt ist, dass der Steueranschlag am antreibbaren Zahnrad mit seiner Anschlagfläche im Verstellweg der Anschlagfläche des Steueranschlages am treibenden Zahnrad verbleibt, was für das neuerliche Ineingriffbringen der Verzahnungen wichtig ist. Durch die auf das antreibbare Zahnrad einwirkende Feder ist dabei erreicht, dass dasselbe mit seinem Gegenanschlag bei ausser Eingriff befindlichen Zahnrädern spielfrei gegen den Begrenzungsanschlag angelegt gehalten ist, so dass die mit dem Arm des antreibbaren Zahnrades verbundenen, von demselben antreibbaren Teile genau in vorgegebenen Positionen gehalten werden.

Ein solches wahlweise zwischen zwei Endpositionen reversierbares Zahnradgetriebe kann beispielsweise sehr vorteilhaft in einem Videomagnetbandgerät für ein in einer Kassette untergebrachtes Magnetband, das mit mindestens einer zwischen zwei Positionen verstellbaren Bandführung aus der Kassette herausführbar und um eine Bandführungstrommel herumschlingbar ist, zur Anwendung kommen, wobei dann das antreibbare Zahnrad des Zahnradgetriebes über ein Hebelgetriebe für eine gleichmässige Verstellung der Bandführung zwischen ihren beiden Positionen sorgt, was im Hinblick auf eine möglichst optimale Schonung des Magnetbandes wichtig ist. Selbstverständlich stellt dies aber nur ein Beispiel für eine Anwendung eines solchen Zahnradgetriebes dar, auf das es nicht beschränkt ist.

Das anhand der Fig. 1 bis 4 beschriebene Ausführungsbeispiel eines wahlweise reversierbaren Zahnradgetriebes ist im Rahmen der Erfindung in mannigfaltigerweise abwandelbar. So können beispielsweise die Steueranschläge vertauscht werden, also der verlängerte Steueranschlag am treibenden Zahnrad und der andere Steueranschlag am antreibbaren Zahnrad vorgesehen sein. Es können aber auch beide Zahnräder je einen über den Kopfkreis des betreffenden Zahnrades hinaus verlängerten Steueranschlag aufweisen. Auch kann als antreibbarer Getriebeteil eine Zahnstange vorgesehen sein, die dann vom treibenden Zahnrad hin- und hergehend angetrieben wird. Es kann aber auch der treibende Getriebeteil als Zahnstange ausgebildet sein, der dann hin- und hergehend antreibbar ist und das antreibbare Zahnrad antreibt. Selbstverständlich kann auch nur ein Zahnrad eine Aussenverzahnung und das mit diesem in und ausser Eingriff bringbare andere Zahnrad eine Innenverzahnung aufweisen. Ferner kann auch das treibende Zahnrad mit einer in sich geschlossenen Verzahnung versehen sein, wobei dann das antreibbare Zahnrad zwingend eine durch zwei Enden begrenzte Verzahnung aufweisen muss, deren ein Ende dann durch jenen Zahn bestimmt ist, dessen Zahnflanke mit der Anschlagfläche des Steueranschlages fluchtet, wobei sich der zahnfreie Abschnitt von diesem Zahn in Antriebsrichtung des antreibbaren Zahnrades wie beim Ineingriffbringen der Zahnräder erstreckt. Selbstverständlich können anstelle von evolventenförmigen Verzahnungen auch Verzahnungen mit einer anderen Zahnflankengeometrie vorgesehen sein, beispielsweise Zykloidenverzahnungen, wobei dann die Anschlagfläche eines verlängerten Steueranschlages einen entsprechend dem zykloidenförmigen Verlauf der Zahnflankenflächen fortgesetzten Verlauf aufweist. Die Antriebsverbindung zwischen dem Motor und dem treibenden Zahnrad kann auch einen anderen Aufbau aufweisen und beispielsweise ohne Überlastkupplung aufgebaut sein, wobei dann das treibende Zahnrad jeweils bei Erreichen einer seiner beiden Endpositionen einen Schalter betätigen kann, der den Motor von der betreffenden Versorgungsspannung abschaltet. Auch kann der Abtrieb vom antreibbaren Zahnrad anders als über den am Zahnrad angebrachten Arm erfolgen, etwa über ein mit dem antreibbaren Zahnrad in Eingriff stehendes weiteres Zahnrad. Die Feder, die das antreibbare Zahnrad in seiner Ruhelage hält, muss selbstverständlich nicht unmittelbar an diesem Zahnrad angreifen, sondern kann auch auf den vom Zahnrad abstehenden Arm oder auf einen vom Arm antreibbaren weiteren Teil einwirken. Anstelle der Feder könnte auch eine separate steuerbare Festhalteeinrichtung vorgesehen sein, die das antreibbare Zahnrad nach dem Aussereingriffbringen der Zahnräder gegen einen feststehenden Begrenzungsanschlag verstellt und an diesen angelegt hält.

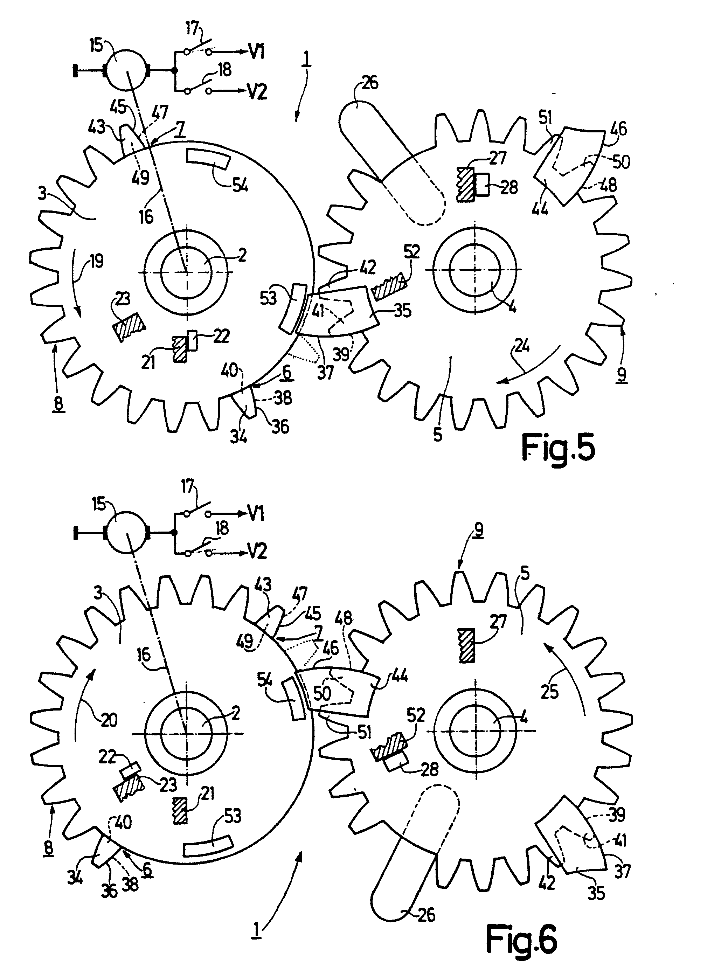

Das in den Fig. 5 und 6 dargestellte wahlweise zwischen zwei Endpositionen reversierbare Zahnradgetriebe 1 unterscheidet sich gegenüber dem anhand der Fig. 1 bis 4 vorstehend beschriebenen Zahnradgetriebe unter anderem dadurch, dass die beiden Zahnräder 3 und 5 in beiden Endpositionen des Zahnradgetriebes ausser Eingriff stehen und ausgehend von der jeweiligen Endposition in beiden Antriebsrichtungen 19 und 20 des treibenden Zahnrades 3 in Eingriff bringbar sind. Hierfür weisen die beiden Zahnräder 3 und 5 zwei Paare von in Richtung der Zahnbreite gegenüber den Verzahnungen 8 und 9 versetzt angeordneten Stueranschlägen 34, 35 und 43, 44 auf, wobei das durch die Steueranschläge 34 und 35 gebildete Paar der Antriebsrichtung 19 und das durch die Steueranschläge 43 und 44 gebildete Paar der Antriebsrichtung 20 des treibenden Zahnrades 3 zugeordnet ist. Die Steueranschläge 43 und 44 treten beim Ineingriffbringen der beiden Zahnräder 3 und 5 in der Antriebsrichtung 20 des treibenden Zahnrades 3 paarweise über an ihnen vorgesehene Anschlagflächen 45 und 46 kraftschlüssig in Wirkverbindung. Jede Anschlagfläche 45 bzw. 46 eines Steueranschlages 43 bzw. 44 weist den gleichen geometrischen, also evolventenförmigen Verlauf wie die beim Ineingriffbringen der Zahnräder 3 und 5 als erste in Antriebsverbindung tretende Zahnflankenfläche 47 bzw. 48 des hierbei als erster in Eingriff tretenden Zahnes 49 bzw. 50 des ihn tragenden Zahnrades 3 bzw. 5 auf. Jede Anschlagfläche 45 bzw. 46 fluchtet in Richtung der Zahnbreite mit der als erste in Antriebsverbindung tretenden Zahnflankenfläche 47 bzw. 48. Die Anschlagfläche 45 des vom treibenden Zahnrad 3 getragenen Steueranschlages 43 weist den gleichen geometrischen Verlauf wie die beim Ineingriffbringen der Zahnräder in Antriebsrichtung 20 des treibenden Zahnrades 3 vorne liegende Zahnflankenfläche 47 des als erster in Eingriff tretenden Zahnes 49 dieses Zahnrades 3 auf. Die Anschlagfläche 46 des vom antreibbaren Zahnrad 5 getragenen Steueranschlages 44 weist den gleichen geometrischen Verlauf wie die beim Ineingriffbringen der Zahnräder in Antriebsrichtung 25 des antreibbaren Zahnrades 5 hinten liegende Zahnflankenfläche 48 des als erster in Eingriff tretenden Zahnes 50 des Zahnrades 5 auf. Von den beiden paarweise zusammenwirkenden Steueranschlägen 43 und 44 ist wiederum der am antreibbaren Zahnrad 5 vorgesehene Steueranschlag 44 über den Kopfkreis der Verzahnung 9 dieses Zahnrades 5 hinaus verlängert und dabei seine Anschlagfläche 46 nach der Zahnflankengeometrie, also entsprechend dem evolventenförmigen Verlauf der Zahnflankenfläche 48, fortgesetzt.

Der Steueranschlag 43 ist durch einen in Richtung der Zahnbreite sich mit dem Zahn 49 überdeckenden, mit diesem einstückig verbundenen Fortsatz des Zahnrades 3 gebildet. Der Steueranschlag 44 ist durch einen die Zahnlücke zwischen dem Zahn 50 und dem in Richtung des Pfeiles 25 neben dem Zahn 50 liegenden Zahn 51 in Richtung der Zahnbreite überdeckenden, mit den beiden Zähnen 50 und 51 und auch mit dem Grundkörper des Zahnrades 5 einstückig verbundenen Fortsatz des Zahnrades 5 gebildet. Der Steueranschlag 35 weist die gleiche Ausbildung wie der Steueranschlag 44 auf, wobei durch die einstückige Verbindung mit dem Grundkörper des Zahnrades 5 für die beiden Steueranschläge 35 und 44 eine hohe Stabilität erreicht wird.

Gegenüber dem anhand der Fig. 1 bis 4 beschriebenen Zahnradgetriebe erfolgt bei vorliegendem Zahnradgetriebe auch die Festlegung des antreibbaren Zahnrades 5 in seinen beiden Endpositionen auf andere Art und Weise. Zur Begrenzung des Verdrehbereiches des antreibbaren Zahnrades 5 wirkt der Gegenanschlag 28 einerseits mit dem feststehenden Begrenzungsanschlag 27 und andererseits mit einem weiteren feststehenden Begrenzungsanschlag 52 zusammen. Durch das Vorsehen dieser feststehenden Begrenzungsanschläge 27 und 52 ist stets sichergestellt, dass jeder Steueranschlag 35 bzw. 44 am antreibbaren Zahnrad 5 mit seiner Anschlagfläche 37 bzw. 46 im Verstellweg der Anschlagfläche 36 bzw. 45 des mit ihm paarweise zusammenwirkenden Steueranschlages 34 bzw 43 am treibenden Zahnrad 3 verbleibt. Um das antreibbare Zahnrad 5 jeweils in seiner Endposition festzulegen, weist das treibende Zahnrad 3 zwei weitere Begrenzungsanschläge 53 und 54 auf, die vom treibenden Zahnrad 3 in axialer Richtung abstehen. Bei ausser Eingriff gebrachten, in einer Endposition befindlichen Zahnrädern liegt ein solcher weiterer am treibenden Zahnrad 3 vorgesehener Begrenzungsanschlag 53 bzw. 54 einem weiteren Gegenanschlag am antreibbaren Zahnrad 5 gegenüber. Jeder weitere Gegenanschlag ist hierbei in einfacher Weise durch einen verlängerten Steueranschlag 35 bzw. 44 gebildet, wobei die Form des weiteren Begrenzungsanschlages 53 bzw. 54 dem freien Ende des mit ihm zusammenwirkenden verlängerten Steueranschlages 35 bzw. 44 angepasst ist. Hierdurch blockiert der weitere Begrenzungsanschlag 53 bzw. 54 eine Verstellung des antreibbaren Zahnrades 5 in der Antriebsrichtung 24 bzw. 25 wie beim Ineingriffbringen der Zahnräder. Auf diese Weise ist das antreibbare Zahnrad 5 mit seinem Gegenanschlag 28 und je einem seiner beiden Steueranschläge 35 bzw. 44 zwischen einem feststehenden Begrenzungsanschlag 27 bzw. 52 und einem am treibenden Zahnrad 3 vorgesehenen, mit diesem verstellbaren weiteren Begrenzungsanschlag 53 bzw. 54 formschlüssig in seiner jeweiligen Endposition festgelegt, so dass auf das antreibbare Zahnrad keine äusseren Kräfte, wie sie durch eine Feder ausgeübt werden, einwirken, was im Hinblick auf einen unbeeinflussten und leichtgängigen Bewegungsablauf im Getriebe vorteilhaft ist. Da das antreibbare Zahnrad 5 in seinen beiden Endpositionen ausser Eingriff vom treibenden Zahnrad steht, kann die jeweilige Lage des antreibbaren Zahnrades in dessen Endpositionen vorteilhafterweise unabhängig von den beiden Endpositionen des treibenden Zahnrades in einem relativ weiten Bereich gewählt werden.

Beim Antreiben des treibenden Zahnrades 3 aus seinen Endpositionen werden die an demselben vorgesehenen weiteren Begrenzungsanschläge 53, 54 mitverstellt, so dass sie von den verlängerten Steueranschlägen 35, 44 wegbewegt werden und diese daher freigegeben werden. Hierdurch kann dann, wenn nachfolgend einer der Steueranschläge 34 bzw. 43 am treibenden Zahnrad gegen den betreffenden verlängerten Steueranschlag 35 bzw. 44 am antreibbaren Zahnrad stösst, analog wie beim vorstehend beschriebenen Ausführungsbeispiel gemäss den Fig. 1 bis 4 der betreffende verlängerte Steueranschlag mitverstellt werden, wobei die Verzahnungen 8 und 9 der beiden Zahnräder 3 und 5 selbsttätig in Eingriff gebracht werden. Dieses Ineingriffbringen erfolgt hierbei aufgrund der Ausbildung und Anordnung der Anschlagflächen der Steueranschläge ebenso wie beim zuvor beschriebenen Ausführungsbeispiel in besonders sicherer, störungsfreier und gleichmässiger Weise. Wenn beim weiteren Antreiben des treibenden Zahnrades die Verzahnungen wieder ausser Eingriff kommen, befindet sich das antreibbare Zahnrad 5 noch nicht zur Gänze in seiner Endposition, jedoch sorgt der betreffende am treibenden Zahnrad vorgesehene weitere Begrenzungsanschlag 53 bzw. 54 dadurch, dass er beim Antreiben des treibenden Zahnrades 3 gegen den betreffenden verlängerten Steueranschlag 35 bzw. 44 stösst und diesen mitnimmt, dafür, dass das antreibbare Zahnrad 5 in seine Endposition verstellt wird und danach darin auch festgelegt wird. Es wäre aber auch möglich, auf das antreibbare Zahnrad eine Totpunktfeder einwirken zu lassen, die jeweils nach dem Aussereingriffbringen der beiden Zahnräder das antreibbare Zahnrad mit seinem Gegenanschlag gegen einen der feststehenden Begrenzungsanschläge drückt und in dieser Endposition durch Federkraft festhält. Erwähnt sei noch, dass bei diesem Zahnradgetriebe auch das antreibbare Zahnrad eine begrenzte Verzahnung aufweist, was aber für die Funktionsweise ohne Bedeutung ist.

Ein solches Zahnradgetriebe kann beispielsweise vorteilhaft in einem Videomagnetbandgerät für ein in einer Kassette untergebrachtes Magnetband, das mit einer zwischen einer Ausfädelposition und einer Einfädelposition verstellbaren Einfädelvorrichtung aus der Kassette herausführbar und um eine Bandführungstrommel herumschlingbar ist und das bei um die Bandführungstrommel herumgeschlungenen Verlauf mit einem aus einer inaktiven Position in eine aktive Position verstellten Bandspannungsfühler zusammenwirkt, zum Verstellen des Bandspannungsfühlers eingesetzt werden, wobei dann das treibende Zahnrad als verzahnter Einfädelring ausgebildet und Bestandteil der Einfädelvorrichtung ist und das davon antreibbare Zahnrad mit begrenzter Verzahnung den Bandspannungsfühler verstellt.

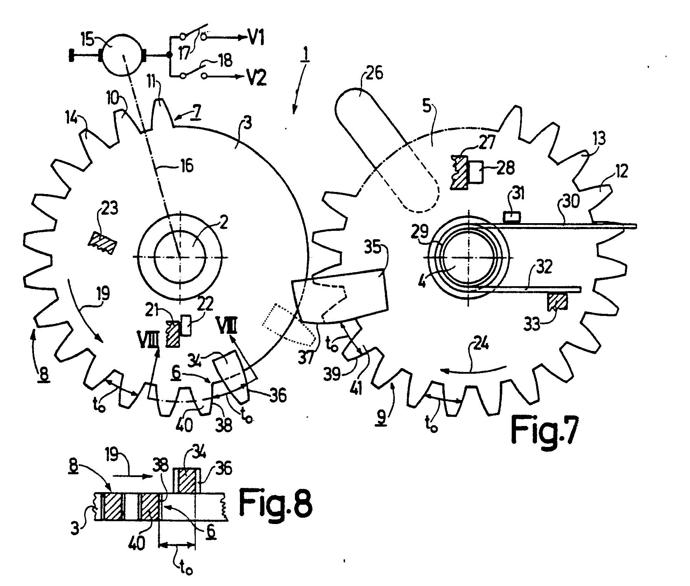

Das in den Fig. 7 und 8 dargestellte Zahnradgetriebe 1 stellt eine Abwandlung des Zahnradgetriebes gemäss den Fig. 1 bis 4 dar, wobei sich diese Abwandlung auf die Position der Steueranschläge 34 und 35 in Relation zu den als erster in Eingriff tretenden Zähnen 40 und 41 der beiden Verzahnungen 8 und 9 bezieht. Wie bereits anhand des Zahnradgetriebes gemäss den Fig. 1 bis 4 erläutert, stehen vom Zahnrad 3 mindestens n Zähne, wobei n = 2 ist, mit der Verzahnung 9 des Zahnrades 5 in Eingriff. Bei dem Zahnradgetriebe gemäss den Fig. 7 und 8 liegt nun jede Anschlagfläche 36 bzw. 37 eines Steueranschlages 34 bzw. 35 in Antriebsrichtung 19 bzw. 24 des diesen Steueranschlag 34 bzw. 35 tragenden Zahnrades wie beim Ineingriffbringen der Zahnräder entlang des Teilkreises dieser Verzahnung 8 bzw. 9 vor der beim Ineingriffbringen der Zahnräder als erste in Antriebsverbindung tretenden Zahnflankenfläche 38 bzw. 39 des als erster in Eingriff tretenden Zahnes 40 bzw. 41 dieses Zahnrades 3 bzw. 5. Dabei weist jede Anschlagfläche 36 bzw. 37 entlang des betreffenden Teilkreises einen Abstand von dieser Zahnflankenfläche 38 bzw. 39 auf, der dem k-fachen der Teilkreisteilung $t_0$ entspricht, wobei k eine ganze Zahl zwischen Null und n-1 ist. In vorliegendem Fall ist k = 1 gewählt, das heisst, dass jede Anschlagfläche 36 bzw. 37 gegenüber der als erste in Antriebsverbindung tretenden Zahnflankenfläche 38 bzw. 39 um den Abstand der Teilkreisteilung $t_0$ in Antriebsrichtung 19 bzw. 24 des betreffenden Zahnrades 3 bzw. 5 wie beim Ineingriffbringen derselben vorausliegend angeordnet ist. Hierdurch ist beim Ineingriffbringen der Zahnräder 3 und 5 erreicht, dass die Steueranschläge 34 und 35 über ihre formschlüssig zusammenwirkenden Anschlagflächen 36 und 37 die Verzahnungen 8 und 9 schon früher in ihrer gegenseitigen Relativlage zueinander ausrichten, als dies beim Zahnradgetriebe gemäss den Fig. 1 bis 4 der Fall ist, wobei wieder mit Sicherheit für ein gleichmässiges und einwandfreies Ineingriffbringen der Verzahnungen, wobei die Zahnflankenflächen 38 und 39 als erster aufeinander zu bewegt werden und in Antriebsverbindung treten, gesorgt ist. Der vorerwähnte Abstand zwischen jeder Anschlagfläche 36 bzw. 37 und der als erster in Antriebsverbindung tretenden Zahnflankefläche 38 bzw. 39 darf höchstens das (n-1)-fache der Teilkreisteilung $t_0$ sein. Wäre dieser Abstand grösser als das (n-1)-fache der Teilkreisteilung gewählt, dann könnte der Fall eintreten, dass die Steueranschläge mit ihren Anschlagflächen bereits wieder ausser Eingriff kommen, bevor noch die Verzahnungen mit ihren Zähnen in Eingriff treten, so dass dann auch kein Ineingriffbringen der Zahnräder mit ihren Verzahnungen erfolgt. Bei einem Getriebe, bei dem von dem zwingend die begrenzte Verzahnung aufweisenden Getriebeteil beispielsweise mindestens drei Zähne mit der Verzahnung am anderen Getriebeteil in Eingriff stehen, kann der Abstand zwischen jeder Anschlagfläche eines Steueranschlages und der als erster in Antriebsverbindung tretenden Zahnflankenfläche entsprechend der einfachen oder zweifachen Teilkreisteilung gewählt werden. Erwähnt sei noch, dass beim Zahnradgetriebe gemäss Fig. 7 auch das antreibbare Zahnrad eine begrenzte Verzahnung aufweist und dass der Steueranschlag am treibenden Zahnrad mit dem Grundkörper und zwei Zähnen desselben einstückig verbunden ist.

**Patentansprüche**

1. Zahnradgetriebe (1) mit einem in mindestens einer Antriebsrichtung (19, 20) antreibbaren treibenden Getriebeteil (3) und einem von diesem antreibbaren Gebriebeteil (5), von denen einer eine durch zwei Enden (6, 7) begrenzte Verzahnung (8) aufweist, die zum Ineingriffbringen und Aussereingriffbringen der beiden Gebriebeteile (3, 5) beim Antreiben des treibenden Gebriebeteiles (3) über mindestens ein Ende (6, 7) derselben mit der Verzahnung (9) am anderen Gebriebeteil (5) in und ausser Eingriff bringbar ist, wobei bei ausser Eingriff gebrachten Getriebeteilen (3, 5) einer derselben (3) mit seiner Verzahnung in den Verstellweg der Verzahnung des anderen Gebriebeteiles (5) hineinragt und bei in Eingriff gebrachten Gebriebeteilen (3, 5) von dem die begrenzte Verzahnung (8) aufweisenden Gebriebeteil (3) mindestens n Zähne mit der Verzahnung (9) am anderen Getriebeteil (5) in Eingriff stehen, wobei n eine ganze Zahl grösser als Null ist, und die zum Ineingriffbringen derselben in mindestens einer Antriebsrichtung (19, 20) des treibenden Gebriebeteiles (3) ein der betreffenden Antriebsrichtung (19, 20) zugeordnetes Paar von in Richtung der Zahnbreite gegenüber den Verzahnungen (3, 9) versetzt angeordneten Steueranschlagen (34, 35; 43, 44) tragen, die beim Ineingriffbringen der beiden Gebriebeteile (3, 5) paarweise über an ihnen vorgesehene Anschlagflächen (36, 37; 43, 46) in Wirkverbindung treten, wobei jede Anschlagfläche (36, 37; 45 46) eines Steueranschlages (34, 35; 43, 44) den gleichen geometrischen Verlauf wie die beim Ineingriffbringen der Gebriebeteile (3, 5) als erste in Antriebsverbindung tretende Zahnflankenfläche (38, 39; 47, 48) des hierbei als erster in Eingriff tretenden Zahnes (40, 41; 49, 50) des ihn tragenden Getriebeteiles (3, 5) aufweist und in Antriebsrichtung (19, 20; 24, 25) des diesen Steueranschlag (34, 35; 43, 44) tragenden Getriebeteiles (3, 5) wie beim Ineingriffbringen der Getriebeteile (3, 5) entlang des Teilkreises dieser Verzahnung (8, 9) vor der beim Ineingriffbringen der Getriebeteile (3, 5) als erste in Antriebsverbindung tretenden Zahnflankenfläche (38, 39; 47, 48) des als erster in Eingriff tretenden Zahnes (40, 41; 49, 50) dieses Getriebeteiles (3, 5) liegt und entlang dieses Teilkreises einen Abstand von dieser Zahnflankenfläche (38, 39; 47, 48) aufweist, der dem k-fachen der Teilkreisteilung entspricht, wobei k eine ganze Zahl zwischen Null und n-1 ist, dadurch gekennzeichnet, dass zur Bildung eines wahlweise zwischen zwei Endpositionen reversierbaren Zahnradgetriebes (1) der treibende Gebriebeteil (3) abwechselnd in zwei zueinander entgegengestezten Antriebsrichtungen (19, 20) antreibbar ist, dass die Anschlagfläche (36; 45) des vom treibenden Getriebeteil (3) getragenen Steueranschlages (34; 43) den gleichen geometrischen Verlauf wie die beim Ineingriffbringen der Getriebeteile (3, 5) in Antriebsrichtung (19, 20) des treibenden Getriebeteiles (3) vorne liegende Zahnflankenfläche (38; 47) des als erster in Eingriff tretenden Zahnes (40; 49) dieses Getriebeteiles (3) und die Anschlagfläche (37; 46) des vom antreibbaren Getriebeteil (5) getragenen Steueranschlages (35; 44) den gleichen geometrischen Verlauf wie die beim Ineingriffbringen der Getreibeteile (3, 5) in Antriebsrichtung (24; 25) des antreibbaren Getriebeteiles (5) hinten liegende Zahnflankenfläche (39; 48) des als erster in Eingriff tretenden Zahnes (41; 50) dieses Getriebeteiles (5) aufweist und dass mindestens einer (35; 44) der beiden paarweise zusammenwirkenden Steueranschläge (34, 35; 43, 44) über den Kopfkreis der Verzahnung (9) des diesen Steueranschlag (35; 44) tragenden Getriebeteiles (5) hinaus verlängert und dabei seine Anschlagfläche (37; 46) nach der Zahnflankengeometrie fortgesetzt ist, wobei bei ausser Eingriff gebrachten Getriebeteilen (3, 5) der vom antreibbaren Getriebeteil (5) getragene Steueranschlag (35; 44) mit seiner Anschlagfläche (37; 46) im Verstellweg der Anschlagfläche (36; 45) des vom treibenden Getriebeteil (3) getragenen Steueranschlages (34; 43) liegt und zum Ineingriffbringen der beiden Getriebeteile (3, 5) der treibende Getriebeteil (3) den von ihm getragenen Steueranschlag (34; 43) in Richtung zum Steueranschlag (35; 44) am antreibbaren Getriebeteil (5) verstellt, und dass ein feststehender Begrenzungsanschlag (27; 52) vorgesehen ist, der bei ausser Eingriff gebrachten Getriebeteilen (3, 5) einem am antreibbaren Getriebeteil (5) vorgesehenen Gegenanschlag (28) gegenüberliegt und dabei eine Verstellung des antreibbaren Getriebeteiles (5) in der Antriebsrichtung (25; 24) wie beim Aussereingriffbringen der Getriebeteile (3, 5) blockiert (Fig. 1, 4; 5, 6; 7).

2. Getriebe nach Anspruch 1, dadurch gekennzeichnet, dass bei ausser Eingriff gebrachten Getriebeteilen (3, 5) der Gegenanschlag (28) am antreibbaren Getriebeteil (5) mit der Kraft einer Feder (29) an den feststehenden Begrenzungsanschlag (27) angelegt gehalten ist (Fig. 1, 4; 7).

3. Getriebe nach Anspruch 1, dadurch gekennzeichnet, dass der treibende Getriebeteil (3) einen weiteren Begrenzungsanschlag (53; 54) aufweist, der bei ausser Eingriff gebrachten Getriebeteilen (3, 5) einem am antreibbaren Getriebeteil (5) vorgesehenen weiteren Gegenanschlag (35; 44) gegenüberliegt und eine Verstellung des antreibbaren Getriebeteiles (5) in der Antriebsrichtung (24; 25) wie beim Ineingriffbringen der Getriebeteile (3, 5) blockiert (Fig. 5, 6).

4. Getriebe nach Anspruch 3, dadurch gekennzeichnet, dass der weitere Gegenanschlag durch einen am antreibbaren Getriebeteil (5) vorgesehenen verlängerten Steueranschlag (35; 44) gebildet ist. (Fig. 5, 6).

**Claims**

1. A toothed gear mechanism comprising a driving gear member (3) which can be driven in at least one driving direction (19, 20) and a gear member (5) which is drivable by said driving gear member, of which one gear member is partly toothed in such a way that its toothed portion (8) is bounded by two end faces (6, 7) and can be brought into and out of mesh with the teeth (9) on the other gear member (5) via at least one end face (6, 7) of said toothed portion in order to bring the two gear members (3, 5) into mesh and out of mesh when the driving gear member (3) is driven, the teeth of one (3) of the gear members projecting into the path of movement of the teeth of the other gear member (5) when said gear members (3, 5) are out of mesh and at least n teeth of the toothed position (8) of the partly toothed gear member (3) being in mesh with the teeth (9) of the other gear member (5) when the gear members (3, 5) are in mesh, n being an integer greater than zero, which gear members, in order to be meshed with each other in at least one driving direction (19, 20) of the driving gear member (3), carry a pair of actuating stops (34, 35; 43, 44) which are axially offset from the teeth (8, 9) which stops correspond to the relevant driving direction (19, 20) and which cooperate pairwise with each other by means their stop surfaces (36, 37; 45, 46) when the two gear members (3, 5) are meshed with each other, each stop surface (36, 37; 45, 46) of an actuating stop (34, 35; 43, 44) having the same geometry as the first-engaging tooth-flank surface (38, 39; 47, 48) of the first meshing tooth (40, 41; 49, 50) of the gear member (3, 5) carrying said stop when the gear members (3, 5) are meshed with each other, which stop surface, viewed along the pitch circle of said teeth (8, 9) in the direction (19, 20; 24, 25) in which the gear member (3, 5) carrying this actuating stop (34, 35; 43, 44) is driven when the gear members (3, 5) are meshed, is situated before the first-engaging tooth-flank surface (38, 39; 47, 48) of the first-meshing tooth (40, 41; 49, 50) of this gear member (3, 5) and is situated along said pitch circle at a distance from said tooth-flank surface (38, 39; 47, 48) which corresponds to k times the circular pitch, k being an integer between zero and n - 1, characterized in that in order to obtain a toothed gear mechanism (1) which is selectively reversible between two end positions, the driving gear member (3) can be driven alternately in two opposite driving directions (19, 20), the stop surface (36, 45) of the actuating stop (34; 43) on the driving gear member (3) has the same geometry as the leading tooth-flank surface (38; 47) of the first-meshing tooth (40; 49) of the driving gear member (3) in the driving direction (19, 20) of said driving gear member (3) when the gear members (3, 5) are meshed with each other and the stop surface (37; 47) of the actuating stop (35; 44) on the drivable gear member (5) has the same geometry as the trailing tooth-flank surface (39; 48) of the first-meshing tooth (41; 50) of the drivable gear member (5) in the driving direction (24; 25) of said drivable gear member (5) when the gear members (3, 5) are meshed with each other, and in that at least one (35; 44) of the two pairwise cooperating actuating stops (34, 35; 43, 44) is extended beyond the addendum circle of the teeth (9) of the gear member (5) carrying said actuating stop (35; 44) in such a way that its stop surface (37; 46) is extended in conformity with the tooth-flank geometry, the stop surface (37; 46) of the actuating stop (35; 44) on the drivable gear member (5) being situated in the path of movement of the stop surface (36; 45) of the actuating stop (34; 43) on the driving gear member (3) when the gear members (3, 5) are not in mesh and the driving gear member (3) moving its actuating stop (34; 43) towards the actuating stop (35; 44) on the drivable gear member (5) in order to mesh the two gear members (3, 5) with each other, and in that there is provided a stationary limiting stop (27, 52) which when the gear members (3, 5) are not in mesh is situated opposite a counter-stop (28) on the drivable gear member (5), to inhibit a movement of the drivable gear member (5) in the driving direction (25; 24) obtained when the gear members (3, 5 ) are brought out of mesh (Figs. 1, 4; 5, 6).

2. A mechanism as claimed in Claim 1, characterized in that when the gear members (3, 5) are not in mesh the counter-stop (28) on the drivable gear member (5) is urged against the stationary limiting stop (27) under the influence of a spring (29).

3. A mechanism as claimed in Claim 1, characterized in that the driving gear member (3) comprises a further limiting stop (53, 54), which is situated opposite a further counter-stop (35; 44) on the drivable gear member (5) when the gear members (3, 5) are not in mesh, to inhibit a movement of the drivable gear member (5) in the driving direction (24; 25) as obtained when the gear members (3, 5) are meshed with each other.

4. A gear mechanism as claimed in Claim 3, characterized in that the further counter-stop is constituted by a prolonged actuating stop (35, 44) on the drivable gear member (5) (Figs. 5, 6).

**Revendications**

1. Engrenage (1) comprenant un élément d'engrenage menant (3) pouvant être entraîné dans au moins un sens d'entraînement (19, 20) et un élément d'engrenage (5) pouvant être mené par le premier, dont l'un présente une denture (8) limitée par deux extrémités (6, 7), qui, en vue de l'engrènement et du désengrènement des deux éléments d'engrenage (3, 5), lors de l'entraînement de l'élément d'engrenage menant (3), peut, par au moins une de ses extrémités (6, 7), etre amené en prise et hors de prise avec la denture (9) prévue sur l'autre élément d'engrenage (5), pour lequel, lorsque les éléments d'engrenage (3, 5) sont désengrenés, l'un d'eux (3) s'étend, par sa denture, dans le trajet de déplacement de la denture de l'autre élément (5) et, lorsque les éléments d'engrenage (3, 5) sont engrenés, au moins n dents de l'élément d'engrenage (3) présentant la denture limitée (8) sont en prise avec la denture (9) de l'autre élément d'engrenage (5), n étant un nombre entier supérieur à zéro, et qui, en vue de leur engrènement dans au moins un sens d'entraînement (19, 20) de l'élément d'engrenage menant (3), portent une paire de butées de commande (34, 35; 43, 44) associées au sens d'entraînement (19, 20) en question, qui sont décalées dans le sens de la largeur des dents par rapport aux dentures (8, 9) et qui, lors de l'engrènement des deux éléments d'engrenage (3, 5), entrent en liaison active, par paire, par l'intermédiaire de surfaces de butée (36, 37; 45, 46) dont elles sont pourvues, chaque surface de butée (36, 37; 45, 46) d'une butée de commande (34, 35; 43, 44) présentant la même allure géométrique que celle des surfaces de flancs (38, 39; 47, 48) de la première dent engrenée (40, 41; 49, 50) de l'élément d'engrenage (3, 5) qui la porte, qui parvient la première en liaison d'entraînement lors de l'engrènement des éléments d'engrenage (3, 5) et se trouvant, dans le sens d'entraînement (19, 20; 24, 25) de l'élément d'engrenage (3, 5) portant cette butée de commande (34, 35; 43, 44), qui correspond à l'engrènement des éléments d'engrenage (3, 5), le long du cercle primitif de cette denture (8, 9), devant celle des surfaces de flancs (38, 39; 47, 48) de la première dent engrenée (40, 41; 49, 50) de cet élément d'engrenage (3, 5) qui parvient la première en liaison d'entraînement lors de l'engrènement des éléments d'engrenage (3, 5) et présentant, le long de ce cercle primitif, une distance de cette surface de flanc de dent (38, 39; 47, 48) qui correspond à k fois le pas du cercle primitif, k étant un nombre entier compris entre 0 et n-1, caractérisé en ce que, pour former un engrenage (1) réversible à volonté entre deux positions d'extrémité, l'élément d'engrenage menant (3) peut être entraîné alternativement dans deux sens d'entraînement (19, 20) opposés l'un à l'autre, que la surface de butée (36; 45) de la butée de commande (34; 43) portée par l'élément d'engrenage menant (3), présente la même allure géométrique que celle des surfaces de flancs (38; 47) de la première dent engrenée (40; 49) de cet élément d'engrenage (3) qui se trouve en avant dans le sens d'entraînement (19, 20) de l'élément d'engrenage menant (3) lors de l'engrènement des éléments d'engrenage (3, 5), et la surface de butée (37; 46) de la butée de commande (35; 44) portée par l'élément d'engrenage mené (5) présente la même allure géométrique que celle des surfaces de flancs (39; 48) de la première dent engrenée (41, 50) de l'engrenage mené (5) qui se trouve en arrière dans le sens d'entraînement (24, 25) de cet élément d'engrenage (5) lors de l'engrènement des éléments d'engrenage (3, 5) et qu'au moins une (35; 44) des deux butées de commande coopérant par paire (34, 35; 43, 44) est prolongée au-delà du cercle de tête de la denture (9) de l'élément d'engrenage (5) portant cette butée de commande (35; 44), tandis que sa surface de butée (37; 46) est prolongée selon la géométrie des flancs de dents, de sorte que, lorsque les éléments d'engrenage (3, 5) sont désengrenés, la butée de commande (35; 44) portée par l'élément d'engrenage menée (5) se trouve, par sa surface de butée (37; 46), dans le trajet de déplacement de la surface de butée (36; 45) de la butée de commande (34; 43) portée par l'élément d'engrenage menant (3) et qu'en vue de l'engrènement des deux éléments d'engrenage (3, 5) l'élément d'engrenage menant (3) déplace la butée de commande (34; 43) qu'il porte en direction de la butée de commande (35; 44) de l'élément d'engrenage mené (5), et qu'est prévue une butée de limitation fixe (27; 52) qui, lorsque les éléments d'engrenage (3, 5) sont désengrenés, est opposée à une contrebutée (28) prévue sur l'élément d'engrenage mené (5) et bloque ainsi un déplacement de l'élément d'engrenage mené (5) dans le sens d'entraînement (25; 24) correspondant au désengrènement des éléments d'engrenage (3, 5) (Fig. 1, 4; 5, 6; 7).

2. Engrenage suivant la revendication 1, caractérisé en ce que, lorsque les éléments d'engrenage (3, 5) sont désengrenés, la contrebutée (28) sur l'élément d'engrenage mené (5) est maintenue appliquée contre la butée de limitation fixe (27) par la sollicitation d'un ressort (29) (Fig. 1, 4; 7).

3. Engrenage suivant la revendication 1, caractérisé en ce que l'élément d'engrenage menant (3) comporte une autre butée de limitation (53, 54) qui, lorsque les éléments d'engrenage (3, 5) sont désengrenés, est opposée à une autre contrebutée (35; 44) prévue sur l'élément d'engrenage mené (5) et bloque un déplacement de l'élément d'engrenage mené (5) dans le sens d'entraînement (24, 25) correspondant à l'engrènement des éléments d'engrenage (3, 5) (Fig. 5, 6).

4. Engrenage suivant la revendication 3, caractérisé en ce que l'autre contrebutée est formée par une butée de commande prolongée (35; 44) prévue sur l'élément d'engrenage mené (5) (Fig. 5, 6).

Fig.1

Fig.2

Fig.3

Fig.4

Fig.5

Fig.6

Fig.7

Fig.8